# EUROPEAN PATENT SPECIFICATION

(11) **EP 2 216 218 B1**
(45) Date of publication and mention of the grant of the patent: **19.01.2011**
(21) Application number: 09001545.4
(22) Date of filing: 04.02.2009
(51) Int. Cl.: B60T 8/32, B60T 8/26, B62K 11/00, B62L 3/00, B62K 19/46, B62J 6/02, B62J 35/00

(54) **Motorcycle wherein component parts thereof are disposed according to an improved layout**
Motorrad mit Bauteilen, die gemäß eines verbesserten Layouts angeordnet sind
Motocyclette dont les pièces sont disposées en fonction d'un agencement amélioré

(43) Date of publication of application: 11.08.2010
(73) Proprietor: YAMAHA MOTOR EUROPE N.V., 1119 NC Schiphol-Rijk (NL)
(72) Inventor: Grion, Andrea, 33057 Palmanova (UD) (IT); Losantos Sistach, Josep, 08013 Barcelona (ES)
(74) Representative: Grünecker, Kinkeldey, Stockmair & Schwanhäusser Anwaltssozietät

(56) References cited:
- EP-A- 1 961 647
- JP-A- 7 112 679
- JP-A- 10 181 546
- JP-A- 11 314 589
- JP-A- 2005 238 901
- US-A- 4 733 757
- US-A1- 2003 142 502
- US-A1- 2005 134 114
- US-A1- 2006 181 891

## Description

The present invention relates to the field of motorcycles. In particular, the present invention relates to the way component parts of said motorcycle are located and/or reciprocally disposed. In more detail, the present invention relates to a motorcycle provided with an anti-lock brake system (ABS) for preventing a wheel from being locked at the time of abrupt braking, and, more particularly, to the layout and disposition of an ABS unit which is an essential constituent part of the anti-lock brake system.

As it is well known in the automotive field, anti-lock brake systems (ABS) are safety systems which prevent the wheels of a motor vehicle from locking while braking. This allows the driver to maintain steering control even under heavy braking conditions by preventing a skid of the wheel and allowing, thus, the wheel to continue exerting friction and/or traction on the road surface. ABS offer, thus, improved vehicle control and safety conditions. ABS are particularly advantageous not only for vehicles such as cars or trucks, but also for motorcycles, either usual motorcycles, such as, for instance, 2-wheeled motorbikes like scooters or the like or other 3 or 4 wheeled motorcycles such as choppers, quads or the like. Typically, an ABS system comprises an ABS unit (also referred to as hydraulic control unit, or HCU) and an electronic control unit (ECU). The ECU collects data from the sensors detecting the speed of the wheels and drives and controls, accordingly, the ABS unit which, in turn, comprises means for regulating the braking pressure on the wheels. The layout and the disposition of the ABS unit is one of the issues to be taken into consideration during the design of a motorcycle. In particular, since the ABS is an optional, but extremely advantageous, device, its layout and disposition have to be accurately determined in order to properly integrate it with the other essential components of the motorcycle without negatively affecting the overall appearance and functionality of the motorcycle. More in particular, the space required for accommodating the ABS and, in particular, the ABS unit has to be properly designed to avoid negative effects on the design and functionality of the essential components of the motorcycle such as, for instance, the headlights or the liquid tank for storing the radiator cooling water. Furthermore, the assembly and maintenance operations of the ABS unit have to be simplified and accelerated in order to reduce the costs related thereto. Moreover, the functionality of the ABS unit may be strongly affected during use of the motorcycle by vibrations or the like. In particular, it has to be avoided that the brake pipes get disconnected from the ABS unit during use of the motorcycle. Accordingly, corresponding fixation means have to be provided. Finding a corresponding adequate location for said fixation means may however reveal to be difficult and/or troublesome. Furthermore, the presence of the ABS unit should not deteriorate the overall look, appearance and aerodynamics of the motorcycle. In particular, the presence of the ABS unit should not influence the overall dimensions of the motorcycle, especially in those cases where the overall dimensions have to be kept contained.

In an attempt to meet as many as possible of the criteria and/or requirements outlined above, several solutions have been proposed in recent years by the manufacturers of motorcycles. One of these solutions is disclosed in the Japanese Patent Application Laid-Open publication number Hei 11-314589. This document on which the preamble of claim 1 is based discloses a motorcycle provided with an ABS system. According to this solution, the ABS unit is mounted in front of the head pipe of the vehicle body frame through a bracket. However, according to this solution, it is necessary to dispose the headlight forwardly away from the ABS unit so that the headlight does not interfere with the ABS unit. Accordingly, the structure around the headlight has to be increased in size, so that this solution cannot be adopted in the case of motorcycles for which the overall dimensions have to be kept contained. Moreover, since the structure around the headlight is affected by the presence of the ABS unit, the degrees of freedom in designing the front portion of the motorcycle are strongly reduced.

A further example of the layout for the ABS unit of a scooter type motocycle can be found in JP10181546.

Therefore, it results from the above, that in spite of all the efforts made, the solutions proposed in the past as known in the prior art do not meet the essential requirements which have to be taken into consideration during the design of a motorcycle. In particular, the proposed solutions do not meet the need according to which the ABS unit has to be disposed according to a layout offering good performances in terms of the overall look, appearance, aerodynamics and reduced or contained dimensions of the motorcycle.

Accordingly, in view of the above, it is an object of the present invention to provide a motorcycle with an improved layout allowing to overcome or at least to drastically reduce the problems and/or drawbacks affecting prior art systems and/or layouts. In particular, it is an object of the present invention to provide a motorcycle with an improved layout according to which at least the ABS unit is conveniently located so as to allow improved performances in terms of overall look and aerodynamics and to avoid undue increase of the overall dimensions of the motorcycle. More in particular, it is an object of the present invention to provide a motorcycle in which an ABS unit can be disposed without increasing the size of a structure around a headlight. Moreover, it is an object of the present invention to provide a motorcycle in which the layout of an ABS unit does not affect or unduly reduce the space available for other essential components of the motorcycle. In particular, it is an object of the present invention, to locate and/or dispose an ABS unit in such a way so as to guarantee the necessary space for other components such as the liquid tank for collecting the radiator cooling water. Furthermore, still according to the present invention, the ABS unit shall be located and/or disposed in such a way so as to guarantee enough space for including an article accommodating body which may be particularly advantageous for accommodating several kind of items such as, for instance, repairing tools or the like.

In general terms, the present invention is based on the consideration that the problems affecting the prior art layouts relating to the ABS unit may be overcome or at least strongly reduced by locating the ABS unit between the head pipe and the headlight device so that a portion of the ABS unit is superposed on or overlaps the headlight device as viewed from above the vehicle. Accordingly, the headlight device can still be disposed at a rear portion, i. e. still close enough to the head pipe and without interfering with the ABS unit. Consequently, it is possible to prevent a structure around the headlight from increasing in size, and to enhance a freedom degree of design of at least the front portion of the motorcycle. A further consideration on which the present invention is based relates to the fact that, by opportunely and adequately shaping and orienting the ABS unit, it is possible to provide space for an article accommodating body. Moreover, still according to the present invention, by opportunely and adequately shaping and orienting the ABS unit, it is possible to provide the necessary space for a liquid tank for collecting the radiator cooling water.

On the basis of the considerations as stated above, the above mentioned problems posed are overcome by the features stated in independent claim 1.

Further embodiments and/or features of the present invention are laid down in the dependent claims.

Further advantages, objectives, features as well as further embodiments of the present invention will become more apparent with the following detailed description when taken with reference to the accompanying drawings, in which identical or corresponding parts are identified by the same reference numerals.

In particular, in the drawings:
Fig. 1 relates to a side view of a motorcycle implementing the layout according to an embodiment of the present invention;
Fig. 2 relates to a front view of an ABS unit provided in the motorcycle;
Fig. 3 relates to a plan view of the ABS unit of Figure 2;
Fig. 4 relates to a left side view of the ABS unit of Figures 2 and 3;
Fig. 5 relates to a right side view of the ABS unit of Figures 2-4;

While the present invention is described with reference to the embodiments as illustrated in the following detailed description as well as in the drawings, it should be understood that the following detailed description as well as the drawings are not intended to limit the scope of the present invention to the particular illustrated embodiments disclosed and/or depicted therein, but rather that the described illustrated embodiments merely exemplify the various aspects of the present invention, the scope of which is defined by the appended claims.

The present invention is understood to be of particular advantage when applied to two wheeled motorcycles, such as, for instance, scooters. For this reason, examples will be given in the following, in which corresponding embodiments of the layout of the ABS unit according to the present invention are applied to scooters. However, it has to be noted that the applications of the layout of the ABS unit according to the present invention are not limited to the case of scooters; on the contrary, the layout of the ABS according to the present invention may also be applied to other motorcycles, in particular, to three or even four wheeled motorcycles such as, for instance, choppers, quads or the like.

In the following, some details and features of the present invention will be described with reference to the drawings wherein corresponding or equivalent features are identified by corresponding reference numerals. Moreover, in both the drawings and the following disclosure, terms such as, for instance, front, rear, left and right have to be understood as meaning respectively front, rear, left and right as used from the perspective of the person sitting on the motorcycle implementing the present invention. Moreover, in the following description, two identical reference numerals are used for identifying "left and right" component parts, even if only one of said two components parts is depicted in the drawings; for instance, if the description refers to a left and right down tubes, with only the left down tube being depicted in the drawings, said left and right down tubes are identified by indicating the same reference numerals twice; in the same way, when the description refers to a component part identified by two identical reference numerals (for instance 2b, 2b), the description has to be understood as meaning that a left and a right component part are provided.

In the drawings, reference numeral 1 identifies a scooter type motorcycle implementing the layout according to the present invention. However, as stated above, it has to be noted that the layout according to the present invention is adapted to be implemented also in other motorcycles, such as, high-speed motorcycles or even off-road motorcycles or the like. The motorcycle 1 comprises an under-bone vehicle body frame 2, a front fork 4 pivotally supported by a head pipe 3 disposed on a front end portion of the vehicle body frame 2, an engine unit 5 (for instance, a unit swing type engine unit) mounted on a substantially central portion of the vehicle body frame 2, and a seat 6 (for instance, a straddle type seat) provided above the engine unit 5 of the vehicle body frame 2.

The vehicle body frame 2 (in the following also referred to as main frame or main body frame) comprises left and right main frame portions or tubes 2a, 2a connected to a central portion of the head pipe 3 in the vertical direction, left and right down portions or tubes 2b, 2b connected to a lower portion of the head pipe 3, and upper tubes or portions 2c, 2c disposed above the left and right down tubes 2b,2b. The left and right main frame portions 2a, the down tubes 2b and the upper tubes 2c are integrally coupled to each other by means of a plurality of connecting members (not shown).

The motorcycle 1 comprises a vehicle body cover 18 for covering substantially a periphery of the vehicle body frame 2. To this end, the vehicle body cover 18 is mounted on the vehicle body frame 2. The vehicle body cover 18 comprises in particular a front cover 18a which covers the head pipe 3 from the front, a leg shield 18b which covers the head pipe 3 from behind, a side cover 18c which covers a lower periphery of the seat 6, and an under cover 18d which covers lower portions of the left and right down tubes 2b, 2b. Low floor type footrests 18e,18e are formed below left and right front portions of the seat 6 of the side cover 18c.

The engine unit 5 is integrally coupled to an engine body 7 on a left side of the engine body 7. The engine unit 5 is integrally formed with a transmission case 8 in which a belt type automatic transmission mechanism (not shown) is accommodated; a rear wheel 9 which is rotatably supported by a rear end portion of the transmission case 8, with said transmission case transmitting driving force from said engine unit 5 to said rear wheel 9. The engine unit 5 is supported such that the engine unit 5 can vertically swing on a pivot shaft 10 mounted on the left and right upper tubes 2c.

A rear cushion 15 is interposed between the engine unit 5 and the upper tube 2c. An air cleaner 13 is disposed in an upper wall of the transmission case 8. and a muffler 14 is disposed on the right side of the rear wheel 9.

A front wheel 11 is rotatably supported at the lower end portions of the front fork 4, and a steering handle 12 is fixed to an upper end portion of the front fork 4. The steering handle 12 is surrounded by a handle cover 19 mounted on the steering handle 12. A wind screen 20 is disposed in front of the handle cover 19.

The motorcycle 1 comprises a front wheel brake apparatus 22 and a rear wheel brake apparatus 23. The front wheel brake apparatus 22 comprises a front wheel brake disc 22a which is fixed such that the front wheel brake disc 22a rotates together with the front wheel 11, a brake caliper 22b mounted on the front fork 4 through a bracket 24, a front master cylinder (not shown) which is driven by a front brake lever connected to a right grip of the steering handle 12, and a front wheel brake pipe 22c which supplies hydraulic pressure from the front master cylinder through a later-described ABS unit 25.

The rear wheel brake apparatus 23 comprises a rear wheel brake disc 23a fixed such that the rear wheel brake disc 23a rotates together with the rear wheel 9, a brake caliper 23b mounted on a swing arm (not shown) of the engine unit 5, a rear master cylinder (not shown) which is driven by a rear brake lever connected to a left grip 12a of the steering handle 12, and a rear wheel brake pipe 23c which supplies hydraulic pressure from the rear master cylinder through the ABS unit 25.

The motorcycle 1 further comprises the ABS unit 25 mounted on the vehicle body frame 2, and a two-light type headlight device 26 disposed in front of the head pipe 3.

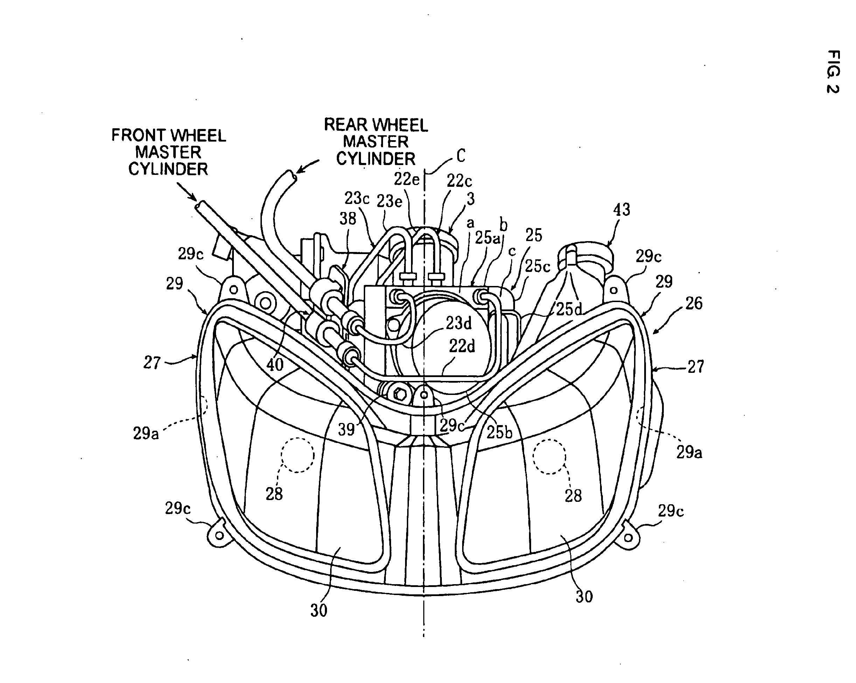

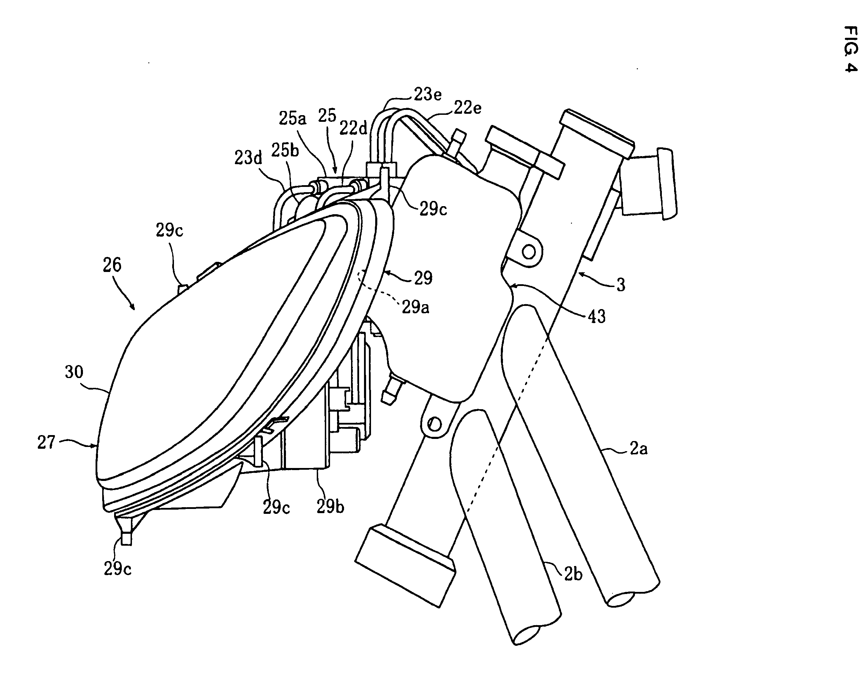

In the following, further details of the layout according to which said ABS unit 25 and said headlight device are disposed and/or oriented and/or located or even shaped will be described with reference to Figures 2 to 5; in Figures 2 to 5, those features already described above with reference to previous Figures are identified by the same reference numerals.

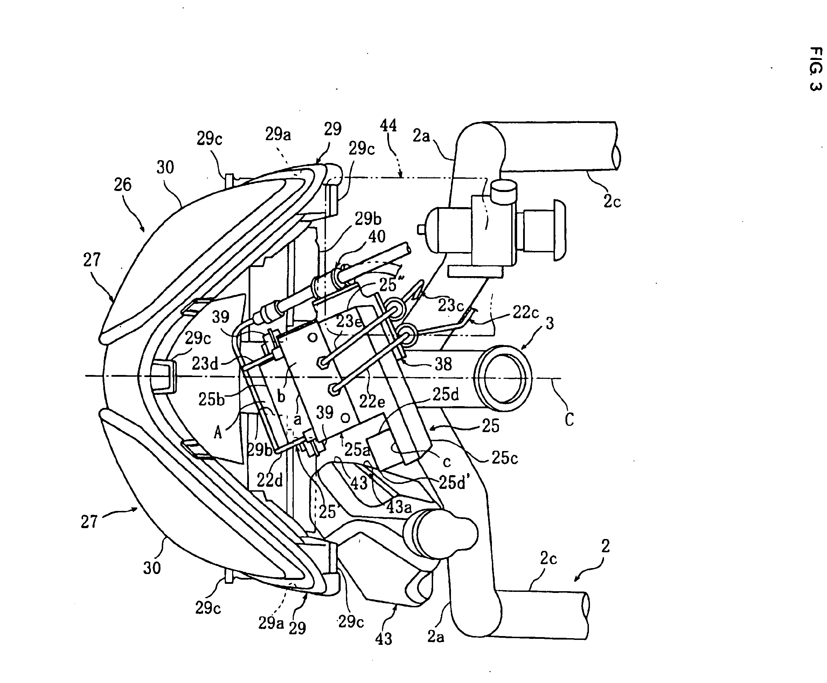

As apparent from Figures 2 to 5, the headlight device 26 is disposed inside (substantially under) the front cover 18a, and comprises first and second headlights 27 and 27 symmetrically disposed with respect to the longitudinal vertical plane of symmetry C of the front wheel (11) and/or the fork (4) (which, with the steering handle (12) positioned as in Fig 3, i.e. so as to drive the motorcycle along a rectilinear path, corresponds and/or coincides with the overall longitudinal vertical plane of symmetry of the vehicle), on opposite sides thereof.

The first headlight 27 comprises a left bulb 28 acting as a light source, a first light case 29 on which the left bulb 28 is mounted, and a first lens 30 mounted on an opening 29a which opens forward from the first light case 29. Similarly, the second headlight 27 comprises a second light case 29 on which a right bulb 28 is mounted, and a second lens 30 mounted on an opening 29a of said second light case 29.

The first and second light cases 29 are integrally formed and comprise case bodies 29b substantially cylindrical and extending rearward from the openings 29a. The left and right case bodies 29b are so formed that their longitudinal axes of symmetry extend so as to be parallel to the longitudinal plane of symmetry C, and the left and right case bodies 29b are located so as to be apart at a predetermined distance from each other in the vehicle width direction. According to this arrangement, a space A extending in the vertical direction is formed between the left and right case bodies 29b (see Fig. 3).

A plurality of mounting portions 29c projecting outward are formed on the openings 29a of the first and second light cases 29. Each mounting portion 29c is mounted on the head pipe 3 through the front cover 18a and the bracket (not shown).

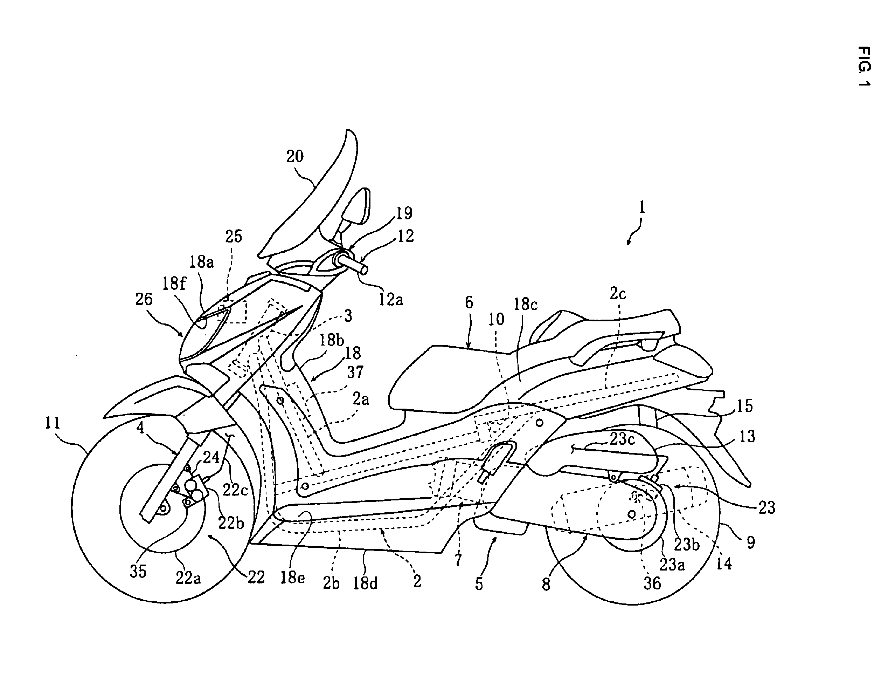

The first and second lenses 30, when viewed from above the vehicle, are integrally formed into a forwardly projecting arc, and are exposed forward from lens openings 18f, 18f formed in the front cover 18a (see Fig. 1).

The ABS unit 25 represents an essential part of the anti-lock brake system for avoiding locking of the front wheel 11 and the rear wheel 9 during hard braking. The anti-lock brake system comprises a front wheel speed sensor 35 which detects a rotation speed of the front wheel 11, a rear wheel speed sensor 36 which detects a rotation speed of the rear wheel 9, and an Electronic Control Unit (ECU) 37 which drives and controls the ABS unit 25 based on data detected by the front and rear wheel speed sensors 35 and 36.

The ABS unit 25 further comprises a substantially rectangular parallelepiped ABS body 25a in which a solenoid control valve (not shown) is incorporated. The solenoid control valve controls the switching of a flow path of brake liquid between a caliper side and a return side. The ABS unit 25 further comprises a drive motor 25b mounted on a front surface a of the ABS body 25a. The drive motor 25b drives an hydraulic pump accommodated in the ABS body 25a.

The ABS unit 25 is resiliently supported by a unit bracket 38 fixed to the head pipe 3 through a plurality of rubber bushes 39.

The front wheel brake pipe 22c comprises a front wheel input pipe 22d which extends from the front wheel master cylinder to the ABS body 25a so as to connect said front wheel master cylinder to the ABS body 25a, and a front wheel output pipe 22e which extends from the ABS body 25a to the front wheel brake caliper 22b so as to connect said ABS body 25a to said front wheel brake caliper 22b.

The rear wheel brake pipe 23c comprises a rear wheel input pipe 23d which extends from the rear wheel master cylinder to the ABS body so as to connect said rear wheel master cylinder to said ABS body 25a, and a rear wheel output pipe 23e which extends from the ABS body to the rear wheel brake caliper so as to connect said ABS body 25a to said rear wheel brake caliper 23b.

The two front wheel input pipe 22d and rear wheel input pipe 23d are connected to left and right upper end portions of the front surface (first surface) a of the ABS body 25a, respectively, and are disposed along the front surface a; moreover, said front wheel input pipe 22d and rear wheel input pipe 23d are connected to the master cylinders through a right side of the ABS body 25a. Both the input pipes 22d and 23d are fixed to a right sidewall of the unit bracket 38 by means of an input side clamp member 40.

The two front wheel output pipe 22e and rear wheel output pipe 23e are connected to a central portion of an upper surface (second surface) b which is adjacent to the front surface a of the ABS body 25a, and are disposed along the upper surface b; moreover, said front wheel output pipe 22e and rear wheel output pipe 23e are connected to the brake calipers 22b and 23b through a rear portion of the ABS body 25a. Both the output pipes 22e and 23e are fixed to a rear wall of the unit bracket 38 by an output side clamp member 41.

A connector connecting portion 25c is formed on a rear end portion of a left side surface of the ABS body 25a. The connector connecting portion 25c projects leftward. A front surface c of the connector connecting portion 25c is deviated rearward with respect to the front surface a and the upper surface b of the ABS body 25a. A power source receiving connector 25d is disposed on the front surface (third surface) c of the connector connecting portion 25c, and a power source supplying connector (not shown) is attachably and detachably connected to the connector 25d.

The ABS unit 25 is disposed in a space surrounded by the front cover 18a and a leg shield 18b at a location between the head pipe 3 and the headlight device 26.

The ABS unit 25 is disposed between the first and second headlights 27 when viewed from above and at a position in the vertical direction such that at least a front portion 25' of the ABS unit 25 overlaps the headlight device 26 when viewed from above the vehicle (see Fig. 3). More specifically, the front portion 25' is superposed (overlaps) on an inner portion of the case body 29b of the first and second light cases 29.

The ABS unit 25 is disposed such that its center of gravity is substantially located on the longitudinal plane of symmetry C.

The ABS unit 25 is oriented in such a way that its longitudinal plane of symmetry forms an angle with the longitudinal plane of symmetry C; in this way, the front portion 25' is located in the space A between the left and right case bodies 29b. More specifically, the longitudinal, vertical plane of symmetry of the ABS unit 25 is rotated about 30° in the counterclockwise direction with respect to the longitudinal vertical plane of symmetry C, so that the front portion 25' of the ABS unit 25 is deviated and/or displaced leftward and the rear portion 25" is deviated rightward as viewed from above the vehicle.

The ABS unit 25 is disposed such that its lower end portion is located lower than an upper end portion of a central portion of the headlight device 26 in the vehicle vertical direction as viewed from front of the vehicle, and such that an upper end of the ABS unit 25 is located lower than an upper end of the head pipe 3 (see Fig. 2).

A liquid tank 43 is disposed on the left side of the ABS unit 25 in the vehicle width direction. Radiator cooling water is stored in the liquid tank 43. An article accommodating portion 44 is disposed on the right side of the ABS unit 25.

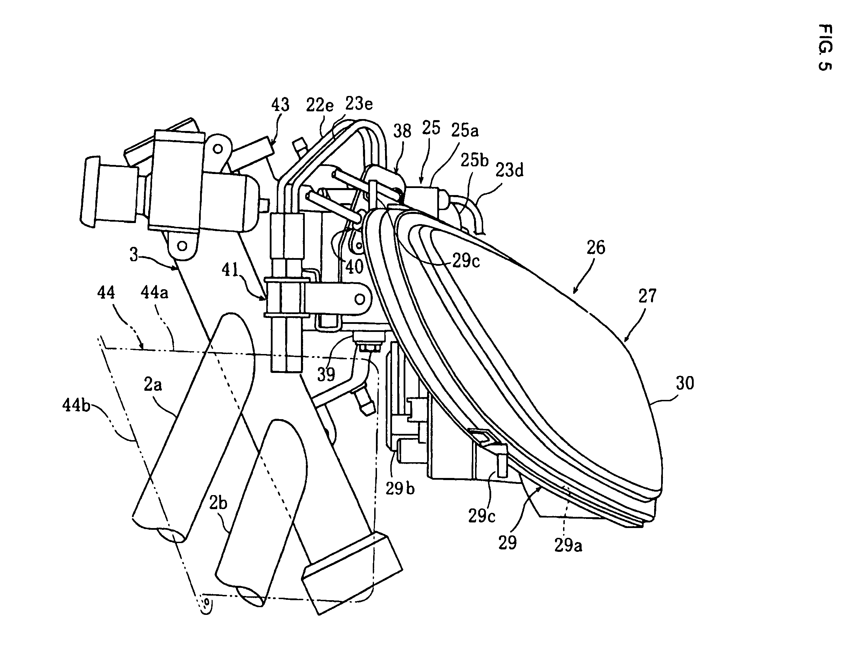

The article accommodating portion 44 comprises a box-like accommodating body 44a which extends in the vertical direction and opens rearward so as to define a rear end opening of said accommodating body 44a; a lid 44b is disposed on a lid opening (not shown) formed in the leg shield 18b, with said lip opening overlapping said rear end opening of said accommodating body 44a in the front-back direction of the motorcycle. Accordingly, said lip 44b allows to open and close said lid opening and said rear end opening of said accommodating body 44a substantially simultaneously. (see Fig. 5). The article accommodating portion 44 is disposed such that its upper end is located lower than a lower end of the ABS unit 25.

The liquid tank 43 is mounted so as to extend along a front side of the head pipe 3, and such that most portion of the liquid tank 43 overlaps the ABS unit 25 as viewed from side of the vehicle.

The ABS unit 25 is disposed such that the rear portion 25" thereof is separated from the liquid tank 43 as viewed from above the vehicle.

An inner end (facing inside the motorcycle) 43' of the liquid tank 43 is located inward of an outer end 25d' of the power source receiving connector 25d in the vehicle width direction. Due to this disposition, at least a portion (facing inside) 43a of the liquid tank 43 can be located between the ABS body 25a and the connector 25d.

According to the present embodiment, when viewed from above the vehicle, the ABS unit 25 is disposed between the head pipe 3 and the headlight device 26 such that the front portion 25' of the ABS unit 25 overlaps the headlight device 26. Therefore, the headlight device 26 can be disposed at a rear position still close to the head pipe 3 but without interfering with the ABS unit 25. Thus, the size and/or dimensions of a structure located around the headlight and/or the head pipe can be kept as contained or reduced as needed, thus enhancing freedom of designing.

According to a further embodiment of the present invention, the ABS unit 25 is inclined with respect to the longitudinal plane of symmetry C such that the front portion 25' is located between the first and second light cases 29. Therefore, the ABS unit 25 can be disposed while effectively utilizing the space A obtained and/or gained between the first and second light cases 29, so that it is possible to more reliably avoid that the size of the structure around the headlight unduly increases.

Still according to an embodiment of the present invention, the first and second lenses 30 of the headlight device 26 are integrally formed into an arc shape as viewed from above. This solution allows to prevent the headlight device 26 from increasing in size while forming the space A in which the front portion 25' of the ABS unit 25 is positioned between the first and second light cases 29.

Since according to still a further embodiment of the present invention, the ABS unit 25 is disposed above the first and second headlights 26, the ABS unit 25 can be disposed in a compact manner by effectively utilizing the dead space formed between the head pipe 3 and the first and second headlights 26.

Moreover, in the case in which the ABS unit 25 is disposed such that its lower end is located lower than the upper end of the headlight device 26, the ABS unit 25 can be properly integrated in a compact way by effectively utilizing the space A between the first and second light cases 29.

With the two input pipes 22d and 23d of the front and rear wheels extending along the front surface (first surface) a of the ABS unit 25, and the two output pipes 22e and 23e extending along the upper surface (second surface) b which is adjacent to the front surface a, the routing spaces of the input pipes 22d and 23d, as well as the routing spaces of the output pipes 22e and 23e can be reduced. For example, when one of the two input pipes is disposed on the front surface and the other one is disposed on the other surface, the space at disposal in proximity to the ABS unit is increased.

According to still a further embodiment of the present invention, the input pipes 22d and 23d and the output pipes 22e and 23e are disposed on the adjacent front surface a and upper surface b, respectively. Therefore, the routing space of the input and output pipes can be further reduced.

When the power source receiving connector 25d is disposed on the front surface a and the front surface (third surface) c of the connector connecting portion 25c which is continuous with the upper surface b, the disposition space of the connector 25d can be reduced.

According to still a further embodiment of the present invention, the article accommodating portion 44 is disposed on the left side of the head pipe 3 in the vehicle width direction, and the article accommodating portion 44 is disposed such that the lower end of the ABS unit 25 is located higher than the upper end of the article accommodating portion 44. Therefore, the article accommodating portion 44 can be disposed such that it does not interfere with the ABS unit 25, and the accommodating capacity can be increased.

According to yet another embodiment of the present invention, the liquid tank 43 is disposed on the right side of the head pipe 3 such that most part of the liquid tank 43 is superposed on the ABS unit 25 as viewed from side of the vehicle, and the ABS unit 25 is inclined with respect to the plane of symmetry C such that the rear portion 25" separates from the liquid tank 43 as viewed from the above the vehicle. Therefore, the liquid tank 43 can be disposed in a compact manner without reducing the tank capacity.

It arises, therefore, from the above disclosure that the present invention allows for overcoming or at least for strongly reducing the problems affecting the prior art layouts. In particular, with the present invention, evident advantages in terms of contained dimensions and improved overall look and appearance as well as aerodynamics of a motorcycle provided with an ABS system are obtained.

While the present invention has been described with reference to the particular embodiments depicted in the drawings, it has to be understood that the present invention is not limited to the particular embodiments described. For instance, according to the embodiments described above, the ABS unit 25 is oriented in such a way that its longitudinal plane of symmetry is rotated about 30° in the counterclockwise direction with respect to the longitudinal vertical plane of symmetry C so that the front portion 25' of the ABS unit 25 is deviated and/or displaced leftward and the rear portion 25" is deviated rightward as viewed from above the vehicle. Accordingly, a liquid tank 43 for storing radiator cooling water is disposed on the left side of the ABS unit 25 in the vehicle width direction ad an article accommodating portion 44 is disposed on the right side of the ABS unit 25. It has, nevertheless, to be noted that the present invention also comprises the embodiment concerning the symmetric solution. In particular, the present invention also comprises the embodiment according to which the ABS unit 25 is oriented in such a way that its longitudinal plane of symmetry is rotated about 30° in the clockwise direction with respect to the longitudinal vertical plane of symmetry C so that the front portion 25' of the ABS unit 25 is deviated and/or displaced rightward and the rear portion 25" is deviated leftward as viewed from above the vehicle. Consequently, according to this embodiment, a liquid tank 43 for storing radiator cooling water is disposed on the right side of the ABS unit 25 in the vehicle width direction ad an article accommodating portion 44 is disposed on the left side of the ABS unit 25.

The scope of the present invention is therefore defined by the appended claims.

## Claims

1. A motorcycle (1) comprising:
a vehicle body frame (2);
an ABS unit (25) mounted on the vehicle body frame (2); and
a headlight device (26) disposed in front of a head pipe (3) which supports a front fork (4) of the vehicle body frame (2),
**characterized in that**:
said ABS unit (25) is disposed between said head pipe (3) and said headlight device (26) such that a portion (25') of said ABS unit (25) overlaps said headlight device (26) as viewed from above the vehicle.

2. The motorcycle according to claim 1,
**characterized in that**:
said ABS unit (25) is disposed such that its lower end portion is located lower than an upper end portion of a central portion of said headlight device (26) and such that an upper end of said ABS unit (25) is located lower than an upper end of said head pipe (3), in the vehicle vertical direction as viewed from front of the vehicle.

3. The motorcycle according to one of claims 1 or 2,
**characterized in that**:
said ABS unit (25) is oriented in such a way that its front surface (a) forms an angle with the longitudinal vertical plane of symmetry C of the front wheel (11) of the motorcycle when the steering handle (12) of the motorcycle is positioned so as to drive the motorcycle along a rectilinear path.

4. The motorcycle according to claim 3,
**characterized in that**:
the front portion (25') of said ABS unit (25) is deviated leftward and the rear portion (25") is deviated rightward from the longitudinal axis of the motorcycle as viewed in a forward direction from above the vehicle.

5. The motorcycle according to one of claims 3 or 4,
**characterized in that**:
said angle measures substantially 30°.

6. The motorcycle according to one of claims 1 to 5,
**characterized in that**:
said headlight device (26) further comprises a first headlight (27) and a second headlight (27) symmetrically disposed with respect to the longitudinal vertical plane of symmetry C of the front wheel (11) of the motorcycle.

7. The motorcycle according to claim 6,
**characterized in that**:
said first headlight (27) comprises a first light case (29) in which a bulb (28) is accommodated, and a first lens (30) disposed in a front opening (29a) of the first light case (29) and said second headlight (27) comprises a second light case (29) in which a bulb (28) is accommodated, and a second lens (30) disposed in a front opening (29a) of the second light case (29).

8. The motorcycle according to claim 7,
**characterized in that**:
said first lens (30) and said second lens (30) are integrally formed into an arc shape as viewed from above the vehicle.

9. The motorcycle according to one of claims 7 or 8,
**characterized in that**:
at least a portion of said ABS unit (25) is located between said first light case (29) and said second light case (29) as viewed from above.

10. The motorcycle according to one of claims 6 to 9,
**characterized in that**:
said ABS unit (25) is disposed above said first headlight (27) and said second headlight (27).

11. The motorcycle according to one of claims 1 to 10,
**characterized in that**:
said ABS unit (25) comprises a first surface (a) along which two input pipes (22d, 23d) are disposed, and
a second surface (b) along which two output pipes (22e, 23e) are disposed.

12. The motorcycle according to claim 11,
**characterized in that**:
said first surface (a) and said second surface (b) are adjacent to each other.

13. The motorcycle according to claim 12,
**characterized in that**:
said ABS unit (25) comprises a third surface (c) which is continuous with said first surface (a) and said second surface (b), and
a power source supplying connector is disposed on said third surface (c).

14. The motorcycle according to one of claims 1 to 13,
**characterized in that**:
said motorcycle further comprises an article accommodating portion (44) disposed on one side of said head pipe (3) in the vehicle width direction, wherein
said ABS unit (25) is disposed such that its lower end portion is disposed so as to be located higher than an upper end portion of said article accommodating portion (44).

15. The motorcycle according to one of claims 1 to 14,
**characterized in that**:
said motorcycle further comprises a liquid tank (43) disposed on one side of said head pipe (3) in the vehicle width direction, wherein at least a portion of said liquid tank (43) is superposed on said ABS unit (25) as viewed from the side of the vehicle, and said ABS unit (25) is inclined with respect to the longitudinal vertical plane of symmetry C of the front wheel (11) of the motorcycle such that a rear portion (25") of said ABS unit (25) separates from said liquid tank (43) further than a front portion (25') of said ABS unit (25) as viewed from above the vehicle.

16. The motorcycle according to one of claims 1 to 15,
**characterized in that**:
the lower end of said ABS unit (25) is located lower than an upper end of said headlight device (26).

## Patentansprüche

1. Motorrad (1), das umfasst:
ein Fahrzeug-Karosseriegerippe (2);
eine ABS-Einheit (25), die an dem Fahrzeug-Karosseriegerippe (2) angebracht ist; und
eine Scheinwerfervorrichtung (26), die vor einem Kopfrohr (3) angeordnet ist, das eine Vorderradgabel (4) des Fahrzeug-Karosseriegerippes (2) trägt,
**dadurch gekennzeichnet, dass**
die ABS-Einheit (25) zwischen dem Kopfrohr (3) und der Scheinwerfervorrichtung (26) so angeordnet ist, dass, von oberhalb des Fahrzeugs gesehen, ein Abschnitt (25') der ABS-Einheit (25) die Scheinwerfervorrichtung (26) überdeckt.

2. Motorrad nach Anspruch 1,
**dadurch gekennzeichnet, dass**
die ABS-Einheit (25) so angeordnet ist, dass sich ihr unterer Endabschnitt, von der Vorderseite des Fahrzeugs her gesehen, an einer tieferen Position befindet als ein oberer Endabschnitt eines Mittelabschnitts der Scheinwerfervorrichtung (26), und sich ein oberes Ende der ABS-Einheit (25), in der vertikalen Richtung des Fahrzeugs, an einer tieferen Position befindet als ein oberes Ende des Kopfrohrs (3).

3. Motorrad nach einem der Ansprüche 1 oder 2,
**dadurch gekennzeichnet, dass**
die ABS-Einheit (25) so ausgerichtet ist, dass ihre Vorderseite (a) einen Winkel zu der vertikalen Längs-Symmetrieebene C des Vorderrades (11) des Motorrades bildet, wenn der Lenker (12) des Motorrades so positioniert ist, dass das Motorrad auf einem geradlinigen Weg gefahren wird.

4. Motorrad nach Anspruch 3,
**dadurch gekennzeichnet, dass**:
der vordere Abschnitt (25') der ABS-Einheit (25), in einer Vorwärtsrichtung von oberhalb des Fahrzeugs gesehen, von der Längsachse des Motorrades nach links abweicht und der hintere Abschnitt (25") davon nach rechts abweicht.

5. Motorrad nach einem der Ansprüche 3 oder 4,
**dadurch gekennzeichnet, dass**:
der Winkel im Wesentlichen 30° misst.

6. Motorrad nach einem der Ansprüche 1 bis 5,
**dadurch gekennzeichnet, dass**:
die Scheinwerfervorrichtung (26) des Weiteren einen ersten Scheinwerfer (27) und einen zweiten Scheinwerfer (27) umfasst, die in Bezug auf die vertikale Längs-Symmetrieebene C des Vorderrades (11) des Motorrades symmetrisch angeordnet sind.

7. Motorrad nach Anspruch 6,
**dadurch gekennzeichnet, dass**:
der erste Scheinwerfer (27) ein erstes Lampengehäuse (29), in dem eine Lampe (28) aufgenommen ist, sowie eine erste Linse (30) umfasst, die in einer vorderen Öffnung (29a) des ersten Lampengehäuses (29) angeordnet ist, und der zweite Scheinwerfer (27) ein zweites Lampengehäuse (29), in dem eine Lampe (28) aufgenommen ist, sowie eine zweite Linse (30) umfasst, die in einer vorderen Öffnung (29a) des zweiten Lampengehäuses (29) angeordnet ist.

8. Motorrad nach Anspruch 7,
**dadurch gekennzeichnet, dass**:
die erste Linse (30) und die zweite Linse (30), von oberhalb des Fahrzeugs gesehen, integral in einer Bogenform ausgebildet sind.

9. Motorrad nach einem der Ansprüche 7 oder 8,
**dadurch gekennzeichnet, dass**:
sich wenigstens ein Abschnitt der ABS-Einheit (25), von oben gesehen, zwischen dem ersten Lampengehäuse (29) und dem zweiten Lampengehäuse (29) befindet.

10. Motorrad nach einem der Ansprüche 6 bis 9,
**dadurch gekennzeichnet, dass**:
die ABS-Einheit (29) oberhalb des ersten Scheinwerfers (27) und des zweiten Scheinwerfers (27) angeordnet ist.

11. Motorrad nach einem der Ansprüche 1 bis 10,
**dadurch gekennzeichnet, dass**:
die ABS-Einheit (25) eine erste Fläche (a), an der zwei Eingangsrohre (22d, 23d) angeordnet sind, und
eine zweite Fläche (b) umfasst, an der zwei Ausgangsrohre (22e, 23e) angeordnet sind.

12. Motorrad nach Anspruch 11,
**dadurch gekennzeichnet, dass**:
die erste Fläche (a) und die zweite Fläche (b) aneinandergrenzen.

13. Motorrad nach Anspruch 12,
**dadurch gekennzeichnet, dass**:
die ABS-Einheit (25) eine dritte Fläche (c) umfasst, die sich an die erste Fläche (a) und die zweite Fläche (b) anschließt, und
ein Stromquellen-Zuführverbinder an der dritten Fläche (c) angeordnet ist.

14. Motorrad nach einem der Ansprüche 1 bis 13,
**dadurch gekennzeichnet, dass**:
das Motorrad des Weiteren einen Abschnitt (44) zum Aufnehmen von Gegenständen umfasst, der, in der Breitenrichtung des Fahrzeugs, an einer Seite des Kopfrohrs (3) angeordnet ist, wobei
die ABS-Einheit (25) so angeordnet ist, dass ihr unterer Endabschnitt so angeordnet ist, dass er sich an einer höheren Position befindet als ein oberer Endabschnitt des Abschnitts (44) zum Aufnehmen von Gegenständen.

15. Motorrad nach einem der Ansprüche 1 bis 14,
**dadurch gekennzeichnet, dass**:
das Motorrad des Weiteren einen Flüssigkeitsbehälter (43) umfasst, der, in der Breitenrichtung des Fahrzeugs, an einer Seite des Kopfrohrs (3) angeordnet ist, wobei wenigstens ein Abschnitt des Flüssigkeitsbehälters (43), von der Seite des Fahrzeugs aus gesehen, über der ABS-Einheit (25) angeordnet ist und die ABS-Einheit (25) in Bezug auf die vertikale Längs-Symmetrieebene C des Vorderrades (11) des Motorrades so geneigt ist, dass ein hinterer Abschnitt (25") der ABS-Einheit (25), von oberhalb des Fahrzeugs gesehen, weiter von dem Flüssigkeitsbehälter (43) getrennt ist als ein vorderer Abschnitt (25') der ABS-Einheit (25).

16. Motorrad nach einem der Ansprüche 1 bis 15,
**dadurch gekennzeichnet, dass**:
sich das untere Ende der ABS-Einheit (25) an einer niedrigeren Position befindet als ein oberes Ende der Scheinwerfervorrichtung (26).

## Revendications

1. Motocycle (1) comprenant :
un cadre de corps de véhicule (2) ;
une unité ABS (25) montée sur le cadre de corps de véhicule (2) ; et
un dispositif de phares (26) disposé devant un tube frontal (3) qui supporte une fourche avant (4) du cadre de corps de véhicule (2),
**caractérisé en ce que** :
ladite unité ABS (25) est disposée entre ledit tube frontal (3) et ledit dispositif de phares (26) de sorte qu'une partie (25') de ladite unité ABS chevauche ledit dispositif de phares (26), vu depuis le dessus du véhicule.

2. Motocycle conformément à la revendication 1,
**caractérisé en ce que** :
ladite unité ABS (25) est disposée de sorte que sa partie d'extrémité inférieure est située plus bas qu'une partie d'extrémité supérieure d'une partie centrale dudit dispositif de phares (26) et de sorte qu'une extrémité supérieure de ladite unité ABS (25) est située plus bas qu'une partie supérieure dudit tube frontal (3), dans la direction verticale du véhicule, vu depuis le devant du véhicule.

3. Motocycle conformément à l'une des revendications 1 ou 2, **caractérisé en ce que** :
ladite unité ABS (25) est orientée de manière à ce que sa surface avant (a) forme un angle avec le plan vertical longitudinal de symétrie C de la roue avant (11) du motocycle lorsque le guidon (12) du motocycle est positionné de manière à conduire ce dernier le long d'un trajet rectiligne.

4. Motocycle conformément à la revendication 3,
**caractérisé en ce que** :
la partie avant (25') de ladite unité ABS (25) est déviée vers la gauche et la partie arrière (25") est déviée vers la droite à partir de l'axe longitudinal du motocycle, vu dans une direction avant à partir du dessus du véhicule.

5. Motocycle conformément à l'une des revendications 3 ou 4, **caractérisé en ce que** :
ledit angle mesure sensiblement 30°.

6. Motocycle conformément à l'une des revendications 1 à 5, **caractérisé en ce que** :
ledit dispositif de phares (26) comprend en outre un premier phare (27) et un second phare (27) disposés symétriquement relativement au plan vertical longitudinal de symétrie C de la roue avant (11) du motocycle.

7. Motocycle conformément à la revendication 6,
**caractérisé en ce que** :
ledit premier phare (27) comprend un premier boîtier de feu (29) dans lequel une ampoule (28) est logée, et une première lentille (30) disposée dans une ouverture avant (29a) du premier boîtier de feu (29), et ledit second phare (27) comprend un second boîtier de feu (29) dans lequel une ampoule (28) est logée, et une seconde lentille (30) disposée dans une ouverture avant (29a) du second boîtier de feu (29).

8. Motocycle conformément à la revendication 7,
**caractérisé en ce que** :
ladite première lentille (30) et ladite seconde lentille (30) sont formées d'un seul tenant sous forme d'arc, vu depuis le dessus du véhicule.

9. Motocycle conformément à l'une des revendications 7 ou 8, **caractérisé en ce que** :
au moins une partie de ladite unité ABS (25) est située entre ledit premier boîtier de feu (29) et ledit second boîtier de feu (29), vu depuis le dessus.

10. Motocycle conformément à l'une des revendications 6 à 9, **caractérisé en ce que** :
ladite unité ABS (25) est disposée au-dessus dudit premier phare (27) et dudit second phare (27).

11. Motocycle conformément à l'une des revendications 1 à 10, **caractérisé en ce que** :
ladite unité ABS (25) comprend une première surface (a) le long de laquelle sont disposés deux tuyaux d'entrée (22d, 23d), et
une deuxième surface (b) le long de laquelle sont disposés deux tuyaux de sortie (22e, 23e).

12. Motocycle conformément à la revendication 11,
**caractérisé en ce que** :
ladite première surface (a) et ladite deuxième surface (b) sont adjacentes l'une à l'autre.

13. Motocycle conformément à la revendication 12,
**caractérisé en ce que** :
ladite unité ABS (25) comprend une troisième surface (c) qui est continue à ladite première surface (a) et ladite deuxième surface (b), et
un connecteur d'alimentation de source d'énergie est disposé sur ladite troisième surface (c).

14. Motocycle conformément à l'une des revendications 1 à 13, **caractérisé en ce que** :
ledit motocycle comprend en outre une partie de rangement (44) disposée sur un côté dudit tube frontal (3) dans le sens de la largeur du véhicule,
dans lequel
ladite unité ABS (25) est disposée de sorte que sa partie d'extrémité inférieure est disposée de manière à être située plus haut qu'une partie d'extrémité supérieure de ladite partie de rangement (44).

15. Motocycle conformément à l'une des revendications 1 à 14, **caractérisé en ce que** :
ledit motocycle comprend en outre un réservoir à liquides (43) disposée sur un côté dudit tube frontal (3) dans le sens de la largeur du véhicule, dans lequel au moins une partie dudit réservoir à liquides (43) est superposée sur ladite unité ABS (25), vu depuis le côté du véhicule, et ladite unité ABS (25) est inclinée relativement au plan vertical longitudinal de symétrie C de la roue avant (11) du motocycle de sorte qu'une partie arrière (25") de ladite unité ABS (25) se sépare dudit réservoir à liquides (43) davantage qu'une partie avant (25') de ladite unité ABS (25), vu depuis le dessus du véhicule.

16. Motocycle conformément à l'une des revendications 1 à 15, **caractérisé en ce que**
l'extrémité inférieure de ladite unité ABS (25) est située plus bas qu'une extrémité supérieure dudit dispositif de phares (26).
